(19) Europäisches Patentamt / European Patent Office / Office européen des brevets

(11) **EP 1 619 750 B1**

(12) **EUROPÄISCHE PATENTSCHRIFT**

(45) Veröffentlichungstag und Bekanntmachung des Hinweises auf die Patenterteilung:
**18.11.2009 Patentblatt 2009/47**

(51) Int Cl.:
*H01Q 7/00* (2006.01)      *H01Q 21/28* (2006.01)
*H04B 5/00* (2006.01)

(21) Anmeldenummer: **04028778.1**

(22) Anmeldetag: **04.12.2004**

(54) **Antennenanordnung für ein RFID-System**

Antenna device for an RFID system

Dispositif d'antenne pour un système RFID

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.07.2004 DE 102004035621**

(43) Veröffentlichungstag der Anmeldung:
**25.01.2006 Patentblatt 2006/04**

(73) Patentinhaber: **Feig Electronic GmbH**
**35781 Weilburg-Waldhausen (DE)**

(72) Erfinder: **Meissner, Wolfgang**
**65599 Dornburg (DE)**

(74) Vertreter: **Knefel, Cordula**
**Patentanwältin,**
**Postfach 1924**
**35529 Wetzlar (DE)**

(56) Entgegenhaltungen:
| | |
|---|---|
| **EP-A- 0 186 483** | **EP-A- 0 645 840** |
| **WO-A-96/38877** | **WO-A-03/026067** |
| **WO-A-03/090310** | **DE-C1- 10 056 176** |
| **US-A- 5 321 412** | **US-A- 5 978 655** |
| **US-B1- 6 703 935** | |

- **PATENT ABSTRACTS OF JAPAN Bd. 1996, Nr. 12, 26. Dezember 1996 (1996-12-26) -& JP 08 222936 A (MASPRO DENKOH CORP), 30. August 1996 (1996-08-30)**

**Beschreibung**

Die Erfindung betrifft eine Antennenanordnung, die Teil eines RFID-Systems zur kontaktlosen Datenübertragung, insbesondere zum Lesen und Beschreiben von kontaktlosen Datenträgern, so genannten Transpondern ist.

Ein RFID-System besteht gemäß dem Stand der Technik aus einer RFID-Antenne, die sich aus mindestens einer Antennenschleife, die eine Induktivität darstellt und aus einer oder mehreren Windungen gebildet wird, und einer Anpassschaltung zusammensetzt, einer Schreib-/Lesestation mit integrierter Sende-, Empfänger- und Steuereinheit und einer Verbindungsleitung zwischen der Schreib-/Lesestation und der RFID-Antenne.

Die RFID-Antenne eines RFID-Systems hat folgende Aufgaben: Einerseits die Übertragung von Energie an den Transponder und andererseits die Übertragung von Daten an und vom Transponder. Die Energie- und Datenübertragung basiert auf der magnetischen Kopplung der Wechselfelder des Readers und des Transponders im Nahbereich der Antenne.

Eine Anforderung an eine RFID-Reader-Antenne ist die Energieübertragung zum Transponder. Dazu wird die Reader-Antenne ihrerseits durch einen Sender mit Energie versorgt. Um die Leistung optimal von der Endstufe des Readers in die Antenne zu übertragen, müssen Reader-Endstufe und Reader-Antenne den gleichen Eingangs- beziehungsweise Ausgangswiderstand besitzen. Eine RFID-Reader-Antenne benötigt also eine bestimmte Eingangsimpedanz, damit die Energie von der Reader-Endstufe optimal zur Antenne übertragen wird.

Ferner muss die Reader-Antenne möglichst gut auf die Betriebsfrequenz des RFID-Systems abgestimmt sein, um einen hohen Strom und damit eine hohe magnetische Feldstärke zu erzielen.

Ist die Resonanzfrequenz der Reader-Antenne auf die Betriebsfrequenz des RFID-Systems abgestimmt, erreicht man mit einer hohen Güte der Reader-Antenne eine hohe Energieübertragung.

Zur Anpassung des Eingangs- beziehungsweise Ausgangswiderstandes und zum Abgleich der Reader-Antenne auf die Betriebsfrequenz dient eine Anpassschaltung, die sich in der Regel in unmittelbarer Nähe zur Antennenschleife befindet.

Transponder bestehen gemäß dem Stand der Technik aus einem integrierten Mikroelektronikbauelement (IC) und einem Resonanzkondensator und einer Antennenspule, wobei der Resonanzkondensator häufig bereits in das Mikroelektronikbauelement integriert ist. Die Antennenspule und der Resonanzkondensator bilden einen elektrischen Schwingkreis und werden auf ihre Betriebsfrequenz von zum Beispiel 13,56 Megahertz (MHz) abgestimmt.

Gelangt ein Transponder in den Erfassungsbereich der Reader-Antenne, so erhält der Transponder über die magnetische Kopplung mit der Antenne Energie zum Betrieb der integrierten Schaltung (IC). Die Höhe der Energie ist abhängig von der Feldstärke beziehungsweise Anzahl der Feldlinien, die den Transponder durchdringen, und dem Winkel der Feldlinien zum Transponder. Die maximale Energie erhält der Transponder bei einem Winkel zwischen Feldlinien und Transponder von 90°. Ist der Winkel zwischen Feldlinien und Transponder sehr spitz oder sogar 0°, so wird der Transponder von keinen Feldlinien durchdrungen und erhält somit auch keine Energie.

Ist die Energie groß genug, wird das Mikroelektronikbauelement in den Grundzustand versetzt und beginnt zu arbeiten.

Der Bereich, in dem der Transponder ausreichend mit Energie versorgt wird und mit dem RFID-System kommunizieren kann, wird Erfassungsbereich genannt.

Die Größe des Erfassungsbereiches wird durch die Faktoren Antennenfläche, Antennenform und Strom in der Antennenschleife (Antennenstrom) bestimmt. Der Strom ist wiederum abhängig von der Güte des Schwingkreises, der Ausgangsleistung des RFID-Readers und der Induktivität der Antennenschleife und erreicht sein Maximum, wenn die Antenne auf Resonanzfrequenz abgestimmt ist.

Um einen möglichst großen Erfassungsbereich zu erzielen, müsste man folglich eine möglichst große Antennenfläche mit einem möglichst großen Antennenstrom betreiben. In der Praxis ist dies aber durch verschiedene Einschränkungen begrenzt.

Einerseits ist die Ausgangsleistung der Endstufenverstärker der RFID-Reader begrenzt, um den Aufwand möglichst gering zu halten. Auch die Erwärmung der Antenne oder der Anpassschaltung sowie die hohen Spannungen an den Bauelementen im Resonanzkreis erschweren das Design und die Entwicklung kostengünstiger Lösungen bei großen Sendeleistungen.

Die Abhängigkeit der magnetischen Feldstärke von dem Strom und der Größe der Antenne kann anhand der folgenden Formel für eine runde Antenne prinzipiell dargestellt werden:

$$H(x) = \frac{I \cdot N \cdot r^2}{2(r^2 + x^2)^{3/2}}$$

H: magnetische Feldstärke

x: Abstand zwischen der Ebene der Antenne und dem Transponder

I: Strom durch die Antenne

N: Anzahl der Windungen der Antenne

r: Radius der runden Antenne.

Wählt man den Abstand x zwischen Transponder und Antennenschleife gleich Null (Transponder liegt in derselben Ebene wie die Antennenschleife), kann die Formel folgendermaßen vereinfacht werden:

$$H(x) = \frac{I \cdot N}{2r}$$

Die Formel zeigt, dass die Feldstärke in der Antennenmitte mit 1/r abnimmt. Geht man davon aus, dass der RFID-Reader in der Lage ist, nur einen bestimmten maximalen Strom in eine Antennenanordnung hineinzutreiben, so wird deutlich, dass ab einer bestimmten Größe der Antenne die magnetische Feldstärke in der Mitte der Antenne nicht mehr ausreichend ist, um einen Transponder zu betreiben.

Andererseits wird die Induktivität abhängig von der Leiterlänge beziehungsweise der vom Leiter umschlossenen Fläche für große Antennen immer größer. Besonders bei höheren Frequenzen (zum Beispiel bei 13,56 MHz) ergeben sich nach der folgenden Gleichung sehr kleine Kapazitäten, die zum Abgleich der Antenne auf die geforderte Resonanzfrequenz notwendig würden.

Die Berechnung der Resonanzfrequenz kann anhand folgender Formel erfolgen:

$$f_{res} = \frac{1}{2\pi\sqrt{L \cdot C}}$$

f: Frequenz
L: Induktivität
C: Kapazität.

Diese kleinen Kapazitäten im Resonanzkreis machen die Antennen in der Praxis schwer abgleichbar, und die Empfindlichkeit gegen Änderungen in den Umgebungsbedingungen wird größer.

Große Antennen und hohe Sendeleistungen haben weiterhin den Nachteil, dass sehr schnell die gültigen Grenzwerte der nationalen Funkvorschriften überschritten werden.

Auch ist es nicht möglich, die Position des Transponders innerhalb der großen Antennenfläche zu bestimmen.

Ein weiteres Problem einer großen Antennenfläche ergibt sich, wenn der RFID-Reader in der Lage sein soll, auch dann mit einem Transponder zu kommunizieren, wenn sich gleichzeitig eine große Anzahl von Transpondern im Erfassungsbereich der Reader-Antenne befindet, weil sich in diesem Fall die RFID-Leistung auf die große Antennenfläche verteilt, wodurch die lokale Feldstärke an jedem Punkt im Erfassungsbereich sinkt, und weil sich die Resonanzfrequenz der Transponder durch die gegenseitige Kopplung untereinander verändert, insbesondere wenn sich die Transponder in geringen Abständen zueinander befinden, wodurch Feldstärken, die der Transponder zum Betrieb benötigt, ansteigen.

Ferner haben einfache große Antennen mit einer großen Fläche den Nachteil, dass die Transponder nur in einer Ausrichtung gelesen werden können, da die Feldlinien senkrecht aus der Antennenfläche austreten und den Transponder ebenfalls möglichst senkrecht durchdringen müssen, damit die notwendige Energie in den Transponder übertragen wird.

Eine Lösung für die aufgezeigten Nachteile ist in dem Stand der Technik (WO 03/026067 A1) beschrieben. Der gewünschte Erfassungsbereich einer Antenne wird über die Summe der Erfassungsbereiche von mehreren kleinen Antennenschleifen aufgebaut. Die einzelnen Antennenschleifen werden hier paarweise an eine Anpassschaltung zusammengefasst und weitere Antennen über so genannte Power Splitter oder Power Divider mit dem RFID-Reader verbunden.

Nachteile der beschriebenen Lösung sind, dass der Abgleich der Antennen auf die Resonanzfrequenz sehr schwierig ist, da sich die Antennen bei geringen Abständen zueinander in Abhängigkeit vom Abstand zueinander gegenseitig beeinflussen. Weiterhin entstehen zwischen den Antennen Lücken im Erfassungsfeld oder die Reichweite des Erfassungsbereiches ist an diesen Stellen wesentlich geringer, das heißt, dass nur in Antennennähe ein durchgängiger Erfassungsbereich entsteht, da die Erfassungsbereiche der benachbarten Antennen nur gering überlappen.

Eine andere Lösung wird im weiteren Stand der Technik (DE 201 10 926 U1 und DE 299 21 752 U1) beschrieben. Dort wird eine mit dem Leser verbundene aktive Antenne durch eine oder mehrere passive Antennen ergänzt. Die Anpassschaltung einer passiven Antenne besteht hier in der Regel hauptsächlich aus einem Kondensator, der die Antenne auf die Resonanzfrequenz abstimmt. Die Antenne hat keine elektrische Verbindung zum Leser und erhält ihre Energie wie auch die Transponder nur über die magnetische Kopplung mit der aktiven Antenne.

Auch bei dieser Lösung entstehen durch Überlagerung der magnetischen Feldlinien Lücken im Erfassungsbereich des Aufbaues, da die Feldlinien verschiedene Richtungen und Phasenlagen zueinander haben. Dadurch wird der Transponder bei paralleler Ausrichtung zur Antenne von weniger Feldlinien durchflossen und erhält deshalb nicht ausreichend Energie.

Weiterhin verringert sich die Signalstärke der Antworttelegramme der Transponder, um den Kopplungsfaktor zwischen der aktiven und der passiven Antenne, wenn sich ein Transponder außerhalb des Erfassungsbereiches der aktiven Antenne, aber in der Nähe der passiven Antenne befindet. Dies kann dazu führen, dass der Transponder zwar ausreichend mit Energie versorgt wird, aber nicht gelesen werden kann.

Werden die Antennen, wie im Stand der Technik (EP 1 298 573 A2) beschrieben, überlappt, entsteht eine elektromagnetische Kopplung zwischen den einzelnen Antennenschleifen, wodurch sich die Resonanzfrequenz der Antennen verändert und sich die Sendeleistung des Readers auf alle verkoppelten Antennen verteilt, was zu einer allgemeinen Reduzierung oder zu einem lückenhaften Erfassungsbereich führt.

Antennen mit geringem Abstand oder überlappende Antennen haben die Eigenschaft, dass sie stark ineinander koppeln. Dies führt dazu, dass der Abgleich der Antennen schwierig und aufwändig ist, da sie sich gegenseitig beeinflussen.

Wird die Antenne in Betrieb genommen, geht ein Teil der Sendeenergie durch die Kopplung in die Nachbarantennen. Diese Energie geht der Sendeantenne verloren, was zu geringeren Feldstärken und Lesereichweiten führt.

Ist die Phasenlage der Ströme zweier Antennen im Überlappungsbereich gleichphasig, so entstehen Löcher im Erfassungsbereich im Bereich der Überlappung, da die Feldlinien dort gegenläufig sind.

Dennoch wird bereits im Stand der Technik (WO 03/026067 A1 und EP 1 298 573 A2) die Aufteilung einer großen Antennenfläche in kleinere Einzelantennen beschrieben, wobei aus der EP 1 298 573 A2 auch bereits prinzipielle Vorteile überlappender Antennen genannt sind.

Zum Stand der Technik (DE 100 56 176 Cl) gehört eine Transponderlesevorrichtung, bei der eine erste und eine zweite Antennenanordnung vorgesehen ist, die jeweils nebeneinander angeordnet sind, und bei denen sich lediglich die Lesebereiche der ersten und einer zweiten Antennenvorrichtung teilweise überlagern. Eine Antennenanordnung besteht dabei aus einer aktiven Sende-/Empfangsantenne und einer passiven Empfangsantenne.

Diese Einrichtung zum Lesen von Transpondern umfaßt ferner eine Einrichtung zum Aktivieren der ersten und zweiten Antennenanordnung, so daß jeweils zu einem bestimmten Zeitpunkt entweder die erste oder zweite Antennenanordnung aktiv ist, und eine Einrichtung zum Verstimmen der jeweils deaktivierten Antenne derart, daß die deaktivierte Antenne nicht auf ihre Arbeitsresonanzfrequenz abgestimmt ist.

Das der Erfindung zugrunde liegende technische Problem besteht darin, eine Antennenanordnung für große zusammenhängende Erfassungsräume anzugeben, bei der die genannten Nachteile vermieden werden.

Dieses technische Problem wird durch eine Antennenanordnung mit den Merkmalen des Anspruches 1 gelöst.

Die erfindungsgemäße Antennenanordnung für RFID-Antennen mit einer Betriebsfrequenz zwischen 100 kHz und 30 MHz, die mit wenigstens einem Reader verbunden ist, und bei der wenigstens zwei je aus einer Antennenschleife mit mindestens einer Windung bestehende Antennen vorgesehen sind, bei der die wenigstens zwei Antennen annähernd in einer Ebene angeordnet sind, bei der zwischen dem wenigstens einen Reader und den Antennen der Antennenanordnung wenigstens ein Multiplexer oder wenigstens ein Multiplexer und wenigstens ein Power Splitter zur gezielten Aktivierung der Antennen angeordnet ist, und bei der jede Antennenschleife eine Vorrichtung zum Auftrennen der inaktiv geschalteten Antennenschleife aufweist, zeichnet sich dadurch aus, dass sich die Antennenschleifen der einzelnen Antennen teilweise überlappen, dass wenigstens eine Antennenschleife eine Fünfeckform aufweist, dass die Antennenschleife aus fünf Seiten gebildet wird, wobei von vier Seiten jeweils zwei Seiten parallel zueinander ausgerichtet sind und diese zwei Seiten paarweise jeweils unterschiedliche Längen aufweisen, und dass zwischen den eine Ecke bildenden Seiten dieser vier Seiten jeweils ein rechter Winkel von 90° ausgebildet ist, und dass zwischen den Seiten dieser vier Seiten und der fünften Seite, die eine Ecke bilden, ein Winkel gebildet ist, der zwischen 132° und 138° liegt, so dass der Summenwinkel des Fünfecks 540° beträgt.

Die vorliegende Erfindung bezieht sich auf eine Antennenanordnung für RFID-Antennen für große zusammenhängende Erfassungsräume mit einer Betriebsfrequenz zwischen 100 kHz bis 30 MHz, die mit wenigstens einer Schreib-/Lesestation verbunden ist, und bei der wenigstens eine aus einer Antennenschleife mit mindestens einer Windung bestehende Antenne vorgesehen ist, bei der wenigstens zwei Antennen in einer Ebene angeordnet sind, und bei der sich die Antennenschleifen der einzelnen Antennen überlappen, und bei der zwischen Schreib-/Lesestation und den Antennen der Antennenanordnung wenigstens ein Multiplexer zur gezielten Aktivierung der Antennen angeordnet ist. Durch diese Antennenanordnung treten die oben beschriebenen Nachteile nicht auf. Weiterhin ergibt sich aus der Erfindung die Möglichkeit, Transponder in mehreren Ausrichtungen lesen zu können.

Die Erfindung besteht darin, dass große Erfassungsräume durch mehrere sich überlappende Antennen abgedeckt werden und die oben beschriebenen Nachteile der gegenseitigen Beeinflussung der sich überlappenden Antennen und der schwierige Antennenabgleich der Einzelantennen durch verschiedene Ausführungsformen beseitigt werden.

Gemäß der Erfindung ist jede Antennenschleife mit einer Vorrichtung zum Auftrennen der Antennenschleife ausgestattet, die es ermöglicht, die Antenne aufzutrennen, wenn sie inaktiv geschaltet ist, damit von der abgeschalteten Antennenschleife keine elektromagnetische Beeinflussung zu benachbarten aktiven Antennenschleifen ausgeht.

Vorteilhaft ist jeweils nur eine Antenne einer Antennenanordnung gleichzeitig aktiviert.

Eine weitere vorteilhafte Ausbildung einer Antennenanordnung sieht vor, dass die Antennenanordnung aus mindestens drei Antennen aufgebaut ist, und dass die Antennen über mindestens einen zusätzlichen Power Splitter mit dem Reader verbunden sind, und dass mindestens zwei Antennen gleichzeitig aktiviert sind.

Besonders vorteilhaft weist der Strom in diesem Fall in benachbarten Antennen die gleiche Stromrichtung auf.

Weitere Merkmale und Vorteile der Erfindung ergeben sich anhand der zugehörigen Zeichnung, in der mehrere Ausführungsbeispiele einer Antennenanordnung nur beispielhaft dargestellt sind. In der Zeichnung zeigen:

Fig. 1a    zwei sich überlappende Antennen in Seitenansicht;

Fig. 1b    zwei sich überlappende Antennen in Draufsicht mit zum Stand der Technik gehörender Antennenform;

Fig. 2a    drei sich überlappende Antennen in Seitenansicht;

Fig. 2b    drei sich überlappende Antennen in Draufsicht mit Anschluss an einen Multiplexer mit zum Stand der Technik gehörender Antennenform;

Fig. 3    eine Darstellung von Feldlinien von zwei Antennen mit der Anordnung von drei Transpondern im Feld;

Fig. 4a    ein geändertes Ausführungsbeispiel mit vier überlappenden Antennen, Power Splittern, Multiplexern und Phasenschiebern mit zum Stand der Technik gehörender Antennenform;

Fig. 4b    ein geändertes Ausführungsbeispiel mit vier überlappenden Antennen, einem Power Splitter, einem Multiplexer und Phasenschiebern mit zum Stand der Technik gehörender Antennenform;

Fig. 5a    eine Darstellung eines Stromverlaufes von zwei Antennen;

Fig. 5b    eine Darstellung eines Stromverlaufes von zwei Antennen;

Fig. 6    eine Darstellung einer erfindungsgemäßen Fünfeckform einer Antenne;

Fig. 7    zwei sich überlappende Antennen in erfindungsgemäßen Fünfeckform in Draufsicht;

Fig. 8a    zwei sich überlappende Antennen in erfindungsgemäßen Fünfeckform in Draufsicht;

Fig. 8b    eine Gate-Anordnung von zwei sich gegenüberliegenden sich jeweils überlappenden zwei Antennen in Fünfeckform;

Fig. 9    eine Gate-Anordnung von zwei sich gegenüberliegenden Antennenpaaren mit Multiplexer mit zum Stand der Technik gehörender Antennenform;

Fig. 10a    eine Gate-Anordnung zwei sich gegenüberliegender sich überlappender Antennenpaare mit Multiplexer und Power Splitter mit zum Stand der Technik gehörender Antennenform;

Fig. 10b    eine Darstellung des Feldlinienverlaufes des in Fig. 10a dargestellten Gates;

Fig. 11    eine Darstellung eines Feldlinienverlaufes eines Gates aus sich diagonal gegenüberliegenden Antennenpaaren;

Fig. 12    eine Seitenansicht eines Feldlinienverlaufes einer Gate-Anordnung von sich gegenüberliegenden überlappenden Antennenpaaren;

Fig. 13    eine Draufsicht auf einen Feldlinienverlauf einer Gate-Anordnung von sich gegenüberliegenden überlappenden Antennenpaaren;

Fig. 14    eine Gate-Anordnung von sich gegenüberliegenden und sich überlappenden Antennentrippeln mit Multiplexer und Power Splitter mit zum Stand der Technik gehörender Antennenform;

Fig. 15a    einen Feldlinienverlauf der in Fig. 14 dargestellten Gate-Anordnung für die gleiche Stromrichtung;

Fig. 15b    einen Feldlinienverlauf der in Fig. 14 dargestellten Gate-Anordnung für die entgegengesetzte Stromrichtung;

Fig. 16a    eine Darstellung der Erfassungsfelder der Antennen der in Fig. 14 dargestellten Gate-Anordnung;

Fig. 16b    eine Darstellung der Erfassungsfelder der Antennen der in Fig. 14 dargestellten Gate-Anordnung;

Fig. 16c    eine Darstellung der Erfassungsfelder der Antennen der in Fig. 14 dargestellten Gate-Anordnung;

Fig. 17a    eine Darstellung der Feldlinien sowie der Erfassungs-/Lesebereiche der in Fig. 14 dargestellten Gate-Anordnung;

Fig. 17b    eine Darstellung der Feldlinien sowie der Erfassungs-/Lesebereiche der in Fig. 14 dargestellten Gate-Anordnung.

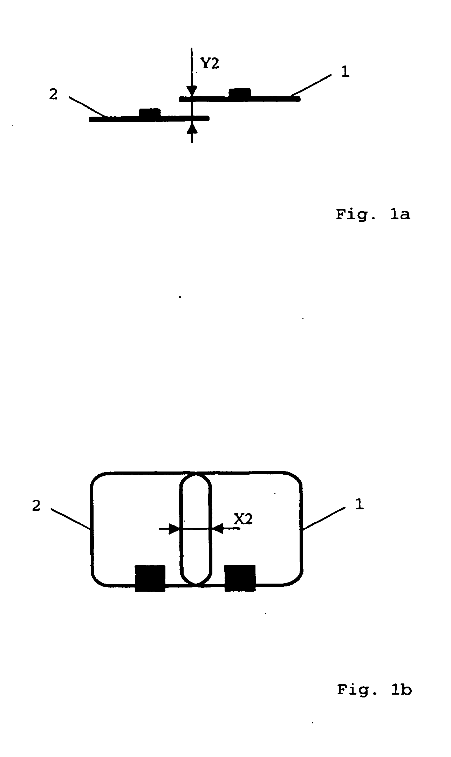

Die Fig. 1a und 1b zeigen die Anordnung von zwei Antennenschleifen (1, 2), die sich in einem bestimmten Abstand (X2, Y2) so überlappen, dass beide Antennen (1, 2) in einer räumlichen

Ebene mit geringem Höhenversatz zueinander liegen.

Die in den Fig. dargestellten rechteckigen Antennenformen gehören zum Stand der Technik und sind vom Schutzbereich nicht umfasst.

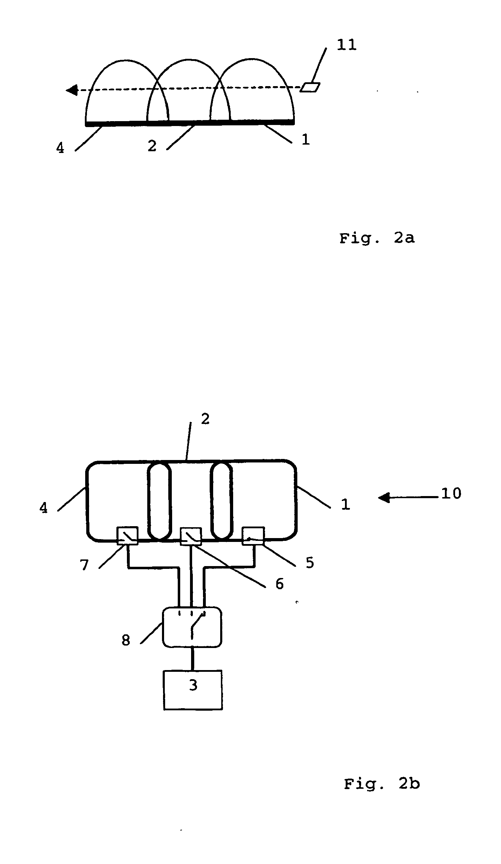

In Fig. 2a ist der halbe Erfassungsbereich einer in Fig. 2b dargestellten Antennenanordnung dargestellt.

In dieser Ausführungsform kann die Überlappung der Antennen (1, 2, 4) nahezu frei gewählt werden. Dazu ist an jeder Antennenschleife (1, 2, 4) mindestens ein Schalter (5, 6, 7) vorgesehen, über den die Antennenschleife (1, 2, 4) selbst aufgetrennt werden kann, damit diese keine Induktivität mehr besitzt beziehungsweise zusammen mit den Schwingkreiskondensatoren der Anpassschaltung keinen Schwingkreis mehr darstellt, in den eine diese Antennenschleife überlappende Antennenschleife elektromagnetisch einkoppeln könnte. Nur zu dem Zeitpunkt, wenn die Antenne mit dem Reader verbunden wird, ist die Antennenschleife über einen Schalter zu schließen und ist betriebsbereit.

Durch das Auftrennen der Antennenschleife ist jede nur denkbare Überlappung möglich, da die aufgetrennten Antennen (1, 2, 4) nicht mehr in die anderen Antennen einkoppeln können. Somit kann der Erfassungsbereich entsprechend der Applikation aus einzelnen Antennen aufgebaut werden.

Durch die Aufteilung der großen Antennenfläche in sich überlappende kleinere Antennenflächen wird erreicht,

-    dass Antennenanordnungen mit variabler Antennenfläche aus Standard-Antennen aufgebaut werden können und somit die Variantenanzahl der benötigten Antennengrößen geringer wird,

-    dass die lokale magnetische Feldstärke im Nutzbereich der Antenne aufgrund der kleineren Antennenfläche ansteigt, was einen sichereren Betrieb auch dann gewährleistet, wenn sich eine Vielzahl von Transpondern im Erfassungsbereich der Antennenanordnung befindet,

-    dass die maximale Reichweite der Antennenanordnung genauer vorhersagbar ist, weil sie aus der maximalen Reichweite einer Einzelantenne der Antennenanordnung resultiert,

-    dass ein durchgängiger Erfassungsbereich über der Antennenanordnung entsteht,

-    dass das von der Antenne angegebene Fernfeld, welches zwar nicht mehr für den Betrieb eines Transponders ausreichend ist, aber für nationale Funkvorschriften ein gewisses Limit nicht überschreiten darf, geringer wird, und

-    dass die Position des Transponders innerhalb des Erfassungsbereiches genauer bestimmt werden kann.

Werden die Antennen (1, 2, 4) über den Multiplexer (8) mit dem Reader (3) verbunden, so ist in einem ersten vorteilhaften Aufbau immer nur eine Antenne mit dem Reader (3) verbunden.

Eine große Antennenanordnung ergibt sich durch die Gesamtfläche der mit dem Multiplexer (8) verbundenen einzelnen Antennen. Dadurch entsteht die vorteilhafte Eigenschaft, dass die Energie des RFID-Readers (3) auf eine kleinere Fläche einer Antenne konzentriert wird und eine hohe magnetische Feldstärke im Erfassungsbereich der Einzelantenne erzeugt wird und diese den Funkvorschriften genügt.

Durch die hohen Feldstärken im Erfassungsbereich der kleineren Antenne können auch mehrere Transponder mit geringem räumlichen Abstand zueinander oder kleine Transponder mit geringerer Empfindlichkeit sicher gelesen werden.

Durch den Multiplexer (8) wird nur ein Reader (3) für sämtliche Antennen (1, 2, 4) benötigt, was den Aufwand weiter reduziert. Wird der Multiplexer (8) vom Reader (3) gesteuert, kann die Position des Transponders im Erfassungsbereich bestimmt werden, da die aktuell mit dem Reader (3) verbundene Antenne (1, 2, 4) bekannt ist.

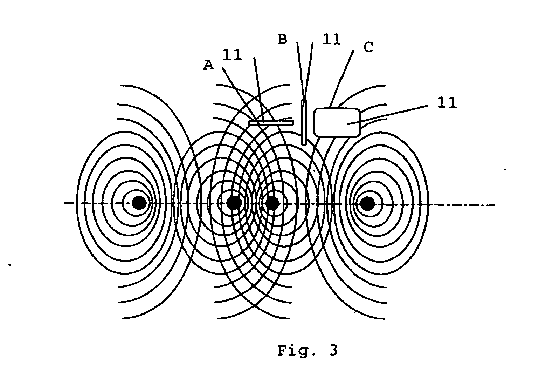

Die bisher beschriebenen Antennenanordnungen sind primär dafür ausgelegt, dass ein Transponder (11) in einer weitestgehend flächenparallelen Ausrichtung, wie in Fig. 3 in Position (A) dargestellt, zur Antennenfläche ausgerichtet ist. In Fig. 3 ist der Transponder (11) mit der Positionsbezeichnung (A) in flächenparalleler Ausrichtung, der Transponder (11) mit der Positionsbezeichnung (B) in orthogonalparalleler Ausrichtung und der Transponder (11) mit der Positionsbezeichnung (C) in orthogonalsenkrechter Ausrichtung zu den Feldlinien angeordnet. Je weiter sich die Ausrichtung des Transponders (11) gegenüber der flächigen Antennenanordnung in die orthogonalparallele Ausrichtung verschiebt, umso weniger Feldlinien durchdringen die Antenne des Transponders, was zur Folge hat, dass die in die Antenne des Transponders eingekoppelte elektromagnetische Energie ab einem gewissen Lagewinkel nicht mehr ausreicht, um den Transponder zu betreiben beziehungsweise die magnetische Kopplung zwischen Antennenanordnung und Transponder zu gering wird.

Lediglich beim Ein- und Austritt des Transponders (11) in den Erfassungsbereich der Antennenanordnung kann mit einem derart orthogonal ausgerichteten Transponder (11) für eine kurze Wegstrecke kommuniziert werden.

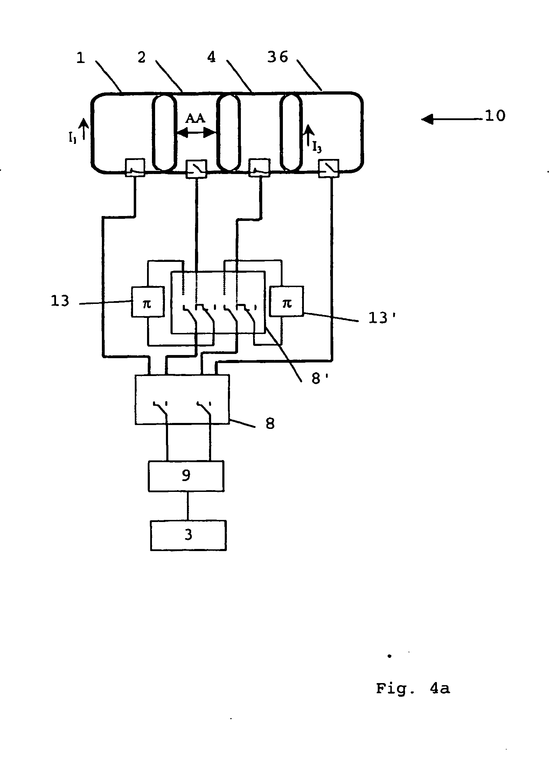

Wie in Fig. 4a dargestellt, erfolgt die Umschaltung zwischen gleich- und gegenphasiger Stromrichtung in den Antennen (4, 2, 1, 36) über die Multiplexer (8, 8') und die 180°-Phasenschieber (13, 13'). Diese Anordnung erlaubt es, sowohl mit weitestgehend flächenparallel ausgerichteten Transpondern (11) und mit weitestgehend orthogonal ausgerichteten Transpondern (11) zu kommunizieren.

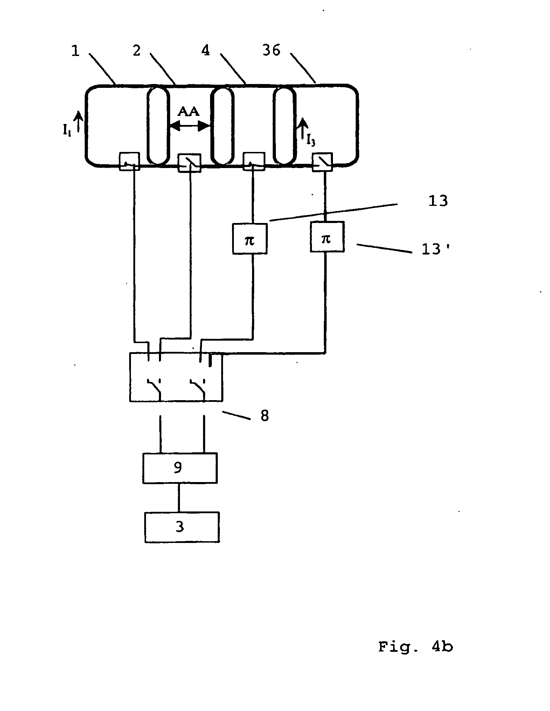

Fig. 4b zeigt eine weitere Ausführungsform, bei der die Phasenschieber (13, 13') die Phasenlage des Wechselstromes in den Antennen (4, 36) um jeweils 90° gegenüber der Phasenlage des Stromes in den Antennen (1, 2) verschieben.

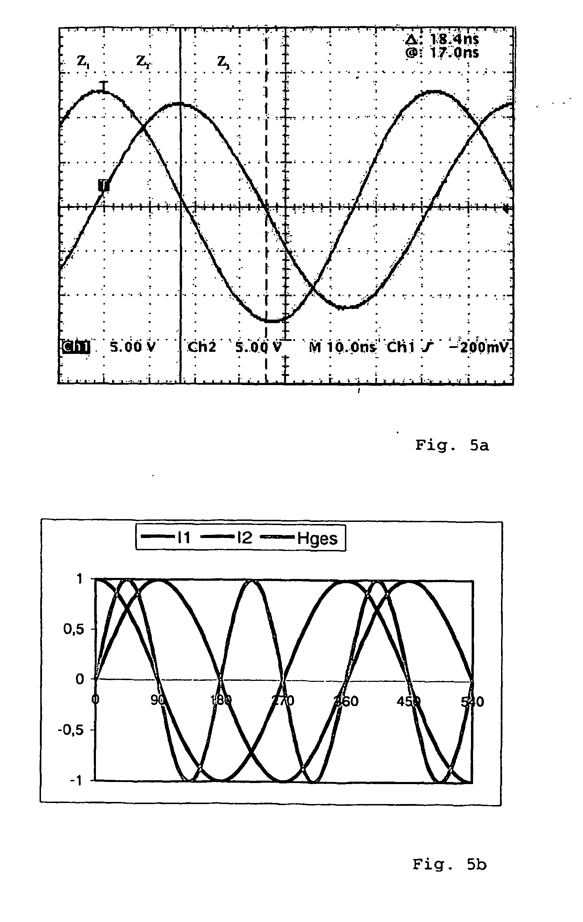

Betrachtet man die Stromverläufe in den beiden Antennen über die Zeit, wie in Fig. 5a und 5b dargestellt, so ist zu erkennen, dass die Ströme zum Zeitpunkt ($Z_2$) gleichphasig sind und den gleichen positiven Betrag aufweisen und zum Zeitpunkt ($Z_1$ und $Z_3$) gegenphasig (positiv/negativ) mit unterschiedlichem Betrag sind. Durch die zeitliche Addition der durch den Stromfluss verursachten Feldlinien aus beiden Antennen (1, 2) ergibt sich nun ein Feldlinienverlauf, der mit doppelter Sendefrequenz zwischen dem Feldlinienverlauf vom Aufbau mit gleicher Stromrichtung und entgegengesetzter Stromrichtung wechselt.

Es entsteht somit ein resultierendes elektromagnetisches Wechselfeld, welches mit dem Doppelten der Sendefrequenz ständig zwischen der überwiegend vertikalen und der überwiegend horizontalen Ausrichtung wechselt.

Alle bisher beschriebenen Aufbauten können mit nahezu allen Antennenformen realisiert werden. Auch können Antennen in verschiedenen Formen überlappt werden und zu Antennenanordnungen, aufgebaut werden.

Oft wird die Form der Antenne auch von der Applikation bestimmt, weil sie zum Beispiel in ein bestimmtes Design passen muss oder mechanische Vorgaben vorhanden sind.

Um mit der erfindungsgemäßen Antennenanordnung auch noch mit solchen Transpondern (11) kommunizieren zu können, die weitestgehend orthogonalsenkrecht, wie in Fig. 3 Position (C) dargestellt, ausgerichtet sind, ist es besonders vorteilhaft, wenn die Antennenschleifen selbst nicht als Rechtecke mit zueinander parallelen, sich überlappenden Kanten ausgebildet sind, sondern jeweils mindestens eine nicht rechtwinklige Seite aufweisen.

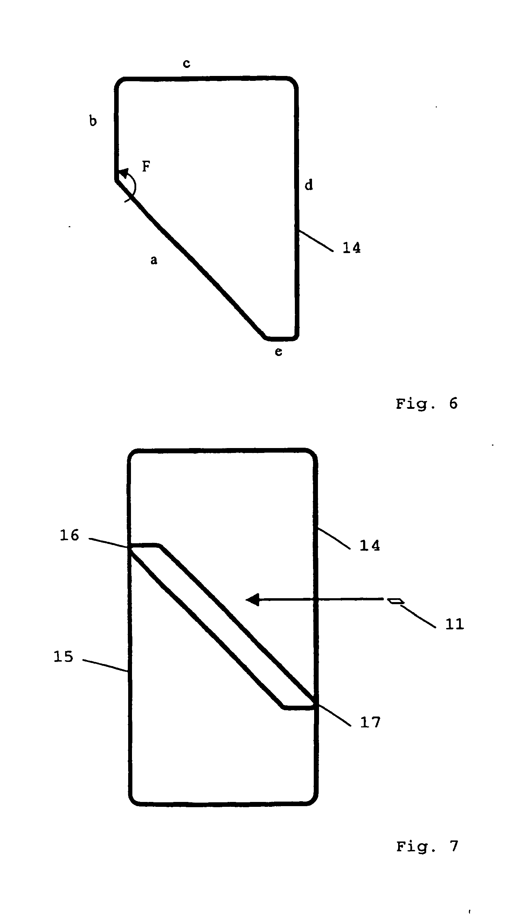

In Fig. 6 ist eine einzelne Antenne mit einer Fünfeckform dargestellt. In Fig. 7 sind zwei sich überlappende Antennen in Fünfeckform dargestellt. Diese Antennenanordnung aus mindestens zwei Antennen (14, 15) mit einer Fünfeckform mit ungleichen Seitenlängen hat sich als besonders vorteilhaft herausgestellt.

Bei dieser Form wird die Antennenschleife (14), wie in Fig. 6 dargestellt, aus den fünf Seiten (a bis e) gebildet, wobei die Seiten (b und d) sowie die Seiten (c und e) jeweils parallel zueinander ausgerichtet sind, allerdings eine unterschiedliche Länge aufweisen. Lediglich zu Seite (a) liegt keine weitere Seite parallel.

Die Längen der Seiten (a bis e) sind dabei so ausgelegt, dass zwischen den Seiten (b und c), (c und d) sowie (d und e) jeweils ein rechter Winkel von 90° ausgebildet ist, während die Winkel zwischen den Seiten (a und b) sowie (a und e) einen stumpfen Winkel bilden, der vorteilhaft zwischen 132° und 138° liegt, so dass der Summenwinkel des Fünfecks wieder 540° beträgt. Spitze Winkel hätten den Nachteil, dass im Bereich der spitzen Winkel eine besonders hohe magnetische Feldstärke entstehen würde, was ein inhomogenes magnetisches Feld der Antennenanordnung zur Folge hätte, wodurch Einbußen in der Lesereichweite der Antennenanordnung resultieren würden.

Ein weiterer Vorteil dieser Form der Antennenschleife (14, 15) liegt darin, dass bei der Überlappung der Antennenschleifen (14, 15) an keiner Stelle die Seiten der einen Antennenschleife (14) direkt parallel über einer Seite der anderen Antennenschleife (15) verlaufen, da beide Antennenschleifen (14, 15) beim Überlappen lediglich zwei Kreuzungspunkte (16, 17) aufweisen, während die parallel geführten Seiten (a) der beiden Antennenschleifen (14, 15) bereits mit einem gewissen Abstand zueinander verlaufen.

Dadurch, dass an den Kreuzungspunkten (16, 17) keine Leiterteilstücke direkt parallel zueinander geführt sind, ist die kapazitive Kopplung der Antennenschleifen (14, 15) untereinander minimiert. Diese kapazitive Kopplung würde ansonsten eine negative Beeinflussung der Antennenanordnung bewirken, wenn eine der Antennenschleifen (14, 15) mittels eines Schalters aufgetrennt würde, um die magnetische Kopplung der Antennenschleifen (14, 15) untereinander zu verhindern.

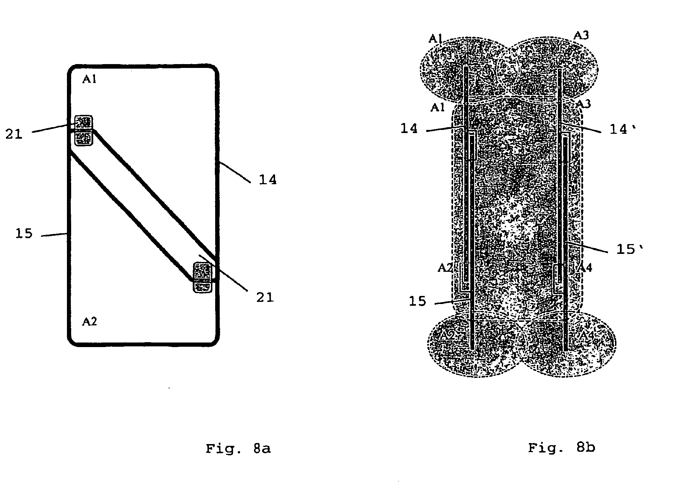

In Fig. 8a sind die Antennen (14, 15), die sich teilweise überlappen, dargestellt mit Einspeisepunkten (21).

In Fig. 8b ist eine Gate-Anordnung aus den Antennen (14, 15; 14', 15') dargestellt. Es ist ein geschlossenes Lesefenster bei entgegengesetzter Stromrichtung durch den schrägen Verlauf eines Teiles des Antennenleiters bei zwei überlappenden Antennen (14, 15; 14', 15') je Gate-Seite dargestellt.

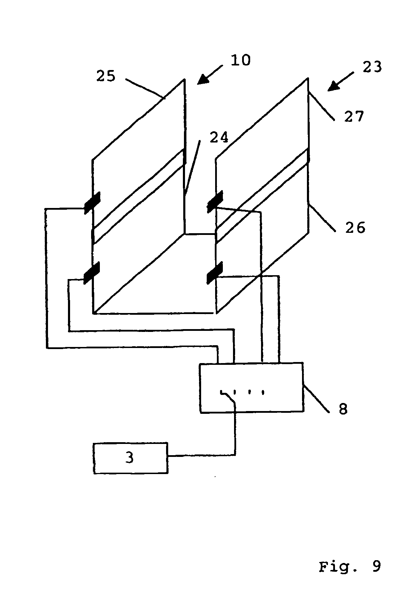

Wie in Fig. 9 dargestellt, können zwei der erfindungsgemäßen Antennenanordnungen (10, 23) flächenparallel zueinander so angeordnet werden, dass zwei Antennen (24, 25) in einer ersten Ebene überlappend angeordnet sind und zwei weitere Antennen (26, 27) in einer zweiten Ebene überlappend angeordnet sind und die Antennenanordnungen (10, 23) der ersten und zweiten Ebene in einem räumlichen Abstand weitestgehend flächenparallel zueinander angeordnet sind. Hierdurch bilden diese eine Antennenanordnung, im Allgemeinen als Gate oder Durchgang bezeichnete Anordnung.

Durch eine derartige Platzierung der erfindungsgemäßen Antennenanordnung (10, 23) als Gate ergeben sich weitere Vorteile, um mit Transpondern in einem großen Erfassungsraum kommunizieren zu können.

Beispielsweise kann mit der Gate-Antennenordnung (23) sichergestellt werden, dass beim linearen Hindurchbewegen eines Transponders zwischen den beiden Ebenen der Antennenanordnung unabhängig von der Ortslage und Ausrichtung des Transponders eine Kommunikation mit dem Transponder stattfinden kann.

Zudem kann der Abstand der beiden Antennenfelder (23), auch Gate-Breite genannt, die doppelte Lesereichweite/Erfassungsbereich einer Anordnung mit einer Ebene haben.

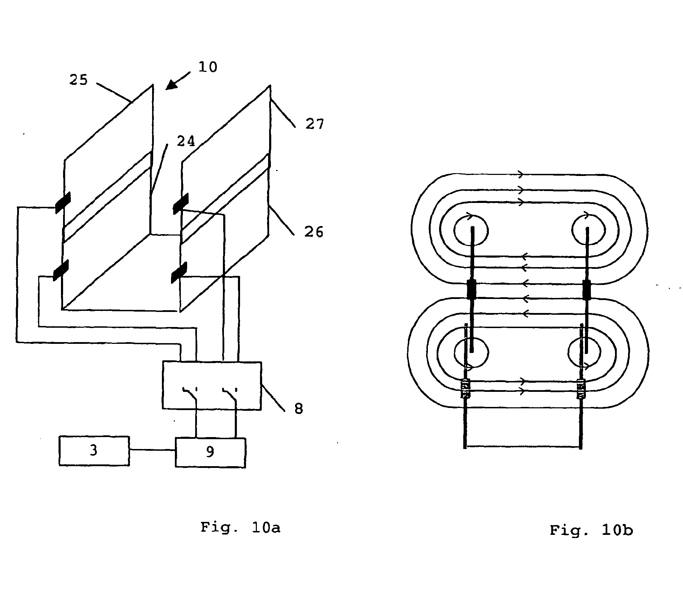

Mittels des Multiplexers (8) und, wie in Fig. 10a dargestellt, mittels des Power Splitters (9) können weitere sehr vorteilhafte Ausführungsformen dieser Antennenanordnung angegeben werden.

Durch sequenzielles Einschalten der Antennen (24, 25, 26, 27) über den Multiplexer (8) kann der komplette Raum zwischen den beiden Antennenfeldern abgetastet oder abgescannt werden.

Werden, wie in Fig. 10b dargestellt, die Antennen (24, 25, 26, 27) so verschaltet, dass jeweils die beiden gegenüberliegenden Antennen (24, 26; 25, 27) eingeschaltet und die Ströme in Phase sind, so lassen sich besonders breite Gates oder Anordnungen mit hohen Feldstärken aufbauen. Diese Verschaltung der Antennen ist als Helmholtz-Prinzip bekannt.

Hierbei werden die Feldlinien der sich gegenüberliegenden Antennenebenen (10, 23) zu einem gesamten magnetischen Feld überlagert. Daraus folgt, dass sich die Vektoren des magnetischen Feldes der beiden Antennen innerhalb des Gates addieren und sich daraus eine wesentlich größere Feldstärke ergibt.

Benötigt ein Transponder zum Beispiel eine minimale Feldstärke von 100 mA/m (Milliampere pro Meter) und ist diese Feldstärke bei einer einzelnen Antenne in einem Abstand von zum Beispiel 60 cm noch messbar, so ist die maximale Reichweite ebenfalls 60 cm. Werden zwei Antennen im Abstand von zum Beispiel 1,40 m in flächenparalleler Ausrichtung zueinander installiert und nach dem Helmholtz-Prinzip verschaltet, so schließt sich das Leseloch in der Mitte des Gates. Durch Überlagerung der Feldlinien ergibt sich im Abstand von 70 cm (Gate-Mitte) aus zum Beispiel zwei mal 80 mA/m eine Feldstärke von 160 mA/m, was dem Transponder zum Betrieb ausreicht.

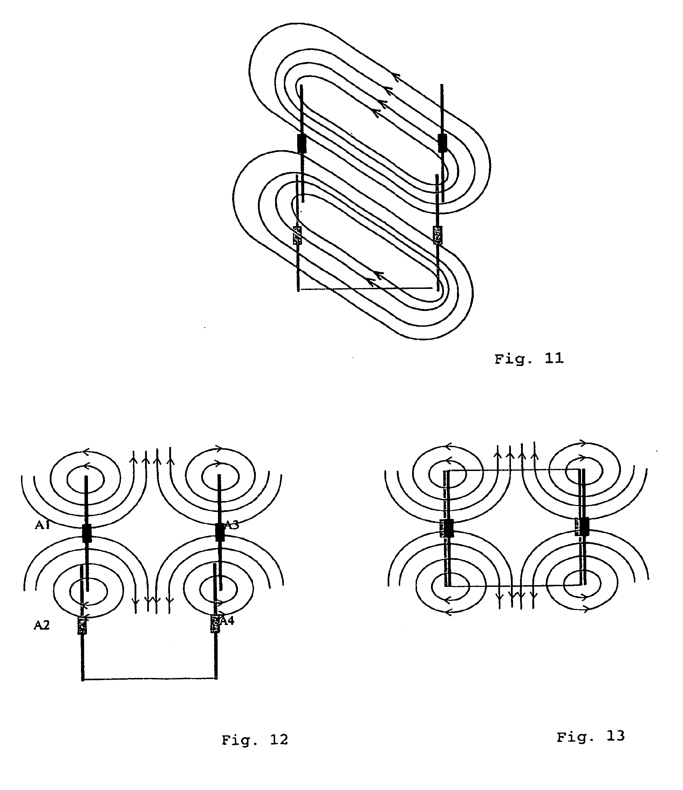

Aktiviert man, wie in Fig. 11 dargestellt, zum Beispiel mittels eines Multiplexers jeweils die diagonal gegenüberliegenden Antennen der beiden Ebenen eines Gates, erreicht man damit, dass auch mit solchen Transpondern kommuniziert werden kann, die nicht weitgehend flächenparallel zur Antennenanordnung ausgerichtet sind.

Allerdings reduziert sich hierdurch bei konstanter Gate-Breite und bei konstanter Ausgangsleistung des RFID-Readers die effektive Feldstärke in der Mitte des Gates geringfügig gegenüber der Ausführungsform, bei der die direkt gegenüberliegenden Antennen aktiviert sind, da die Feldlinien nicht exakt in die gleiche Richtung verlaufen. Die Überlagerung der Feldlinien erfolgt ebenfalls, die Feldstärken sind aber nicht so groß wie oben beschrieben.

Soll auch mit Transpondern, die orthogonal zur Antennenfläche ausgerichtet sind, kommuniziert werden, ist eine weitere Ausführungsform der Antennenordnung vorteilhaft, bei der eine Phasenverschiebung zwischen den Strömen der Antennen der ersten und der zweiten Ebene 180° beträgt, wenn diese gleichzeitig mit dem Reader verbunden sind.

Der daraus resultierende Feldverlauf ist in den Fig. 12 und 13 dargestellt und wird allgemein als Anti-Helmholtz-Prinzip bezeichnet. In Fig. 12 ist die Seitenansicht und in Fig. 13 die Draufsicht dargestellt.

Um die Vorteile des Helmholtz- und des Anti-Helmholtz-Prinzips gleichermaßen auszunutzen beziehungsweise deren spezifische Nachteile zu kompensieren, wird in einer weiteren Ausführungsform der Strom durch die Antennenschleifen ständig und mit hoher Frequenz (mehr als 100 mal je Sekunde) zum Beispiel mittels eines Multiplexers so umgeschaltet, dass das magnetische Feld der Antennenanordnung ständig zwischen dem Helmholtz- und dem Anti-Helmholtz-Prinzip alterniert.

Anschließend können beide Konfigurationen auf dem nächsten Antennenpaar jeder Ebene des Gates ausgeführt werden.

Die Phasenverschiebung kann zum Beispiel mit Hilfe eines Phasenschiebers, Koaxialkabels oder durch Umschalten der Polarität der beiden Adern des Antennenkabels erfolgen.

Die Umschaltung zwischen dem Helmholtz- und Anti-Helmholtz-Prinzip zwischen den beiden Ebenen der Gate-Antennenanordnung kann in einer weiteren sehr vorteilhaften Ausführungsform auch mittels eines 90°-Phasenschiebers erfolgen.

Hierdurch entsteht zwischen den sich gegenüberliegenden jeweils aktiven Antennenschleifen jeder Ebene der Antennenanordnung wiederum ein resultierendes magnetisches Feld, welches mit der doppelten Frequenz des Stromes ständig zwischen dem Helmholtz- und dem Anti-Helmholtz-Prinzip alterniert.

Somit ist auch hier das Lesen von Transpondern in zwei Ausrichtungen möglich.

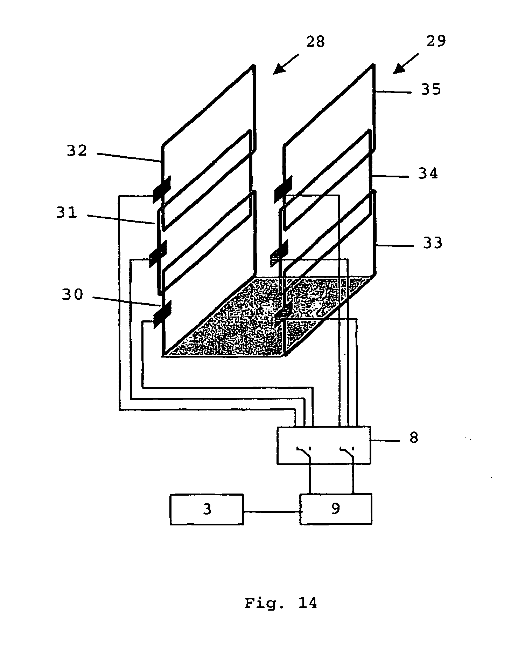

In Fig. 14 sind Antennenanordnungen (28, 29) dargestellt mit jeweils drei Antennen (30, 31, 32; 33, 34, 35).

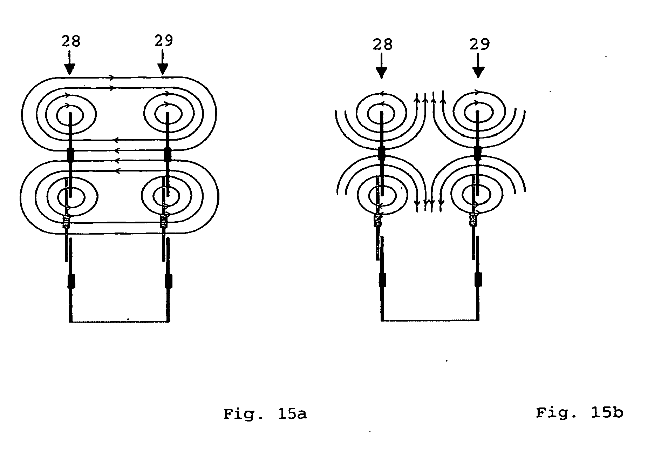

In Fig. 15a ist der Feldlinienverlauf der in Fig. 14 dargestellten Antennenanordnungen (28, 29) für die gleiche und in Fig. 15b für die entgegengesetzte Stromrichtung dargestellt.

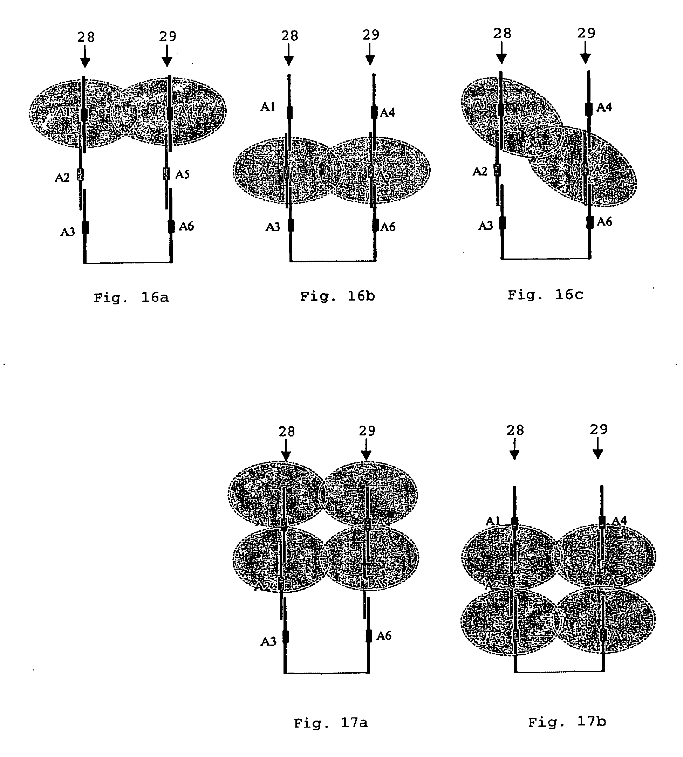

Die Fig. 16a bis 16c zeigen die Erfassungsfelder der Antennenanordnung (28, 29) bei gleicher Stromrichtung der rechten und linken Antennenanordnung (28, 29). Die Antennen (30 bis 35) werden mit dem Multiplexer (8) verschieden weitergeschaltet.

Die Fig. 17a und 17b zeigen die Erfassungsfelder der Antennenanordnung (28, 29) bei entgegengesetzter Stromrichtung der rechten und linken Gate-Seite der in Fig. 14 dargestellten Antennenanordnung (28, 29) mit einer 180°-Phasenverschiebung. In den Fig. 17a und 17b sind die Feldlinien und die Erfassungsbereiche/Lesebereiche dargestellt sowie die Labelausrichtung 90° zur Antenne.

Sämtliche hier dargestellten Beispiele können auch mit einer größeren Anzahl von Antennen realisiert werden.

Bezugszahlen

| | |
|---|---|
| 1 | Antenne |
| 2 | Antenne |
| 3 | Reader |
| 4 | Antenne |
| 5 | Schalter |
| 6 | Schalter |
| 7 | Schalter |
| 8 | Multiplexer |
| 9 | Power Splitter |
| 10 | Antennenanordnung |
| 11 | Transponder |
| 12 | Anpassschaltung |
| 13 | Phasenschieber |
| 13' | Phasenschieber |
| 14 | Antenne |
| 14' | Antenne |
| 15 | Antenne |
| 15' | Antenne |
| 16 | Kreuzungspunkt |
| 17 | Kreuzungspunkt |
| 21 | Einspeisepunkt |
| 22 | Antenne |
| 23 | Antennenanordnung |
| 24 | Antenne |
| 25 | Antenne |
| 26 | Antenne |
| 27 | Antenne |
| 28 | Antennenanordnung |
| 29 | Antennenanordnung |
| 30 | Antenne |
| 31 | Antenne |
| 31 | Antenne |
| 32 | Antenne |
| 33 | Antenne |
| 34 | Antenne |
| 35 | Antenne |
| 36 | Antenne |
| a | Seite |
| b | Seite |
| c | Seite |
| d | Seite |
| e | Seite |
| A | Position des Transponders |
| B | Position des Transponders |
| C | Position des Transponders |
| $I_1$ | Strom |
| $I_3$ | Strom |
| Y | Leseabstand |
| $Z_1$ | Zeitpunkt |
| $Z_2$ | Zeitpunkt |
| $Z_3$ | Zeitpunkt |

**Patentansprüche**

1. Antennenanordnung für RFID-Antennen mit einer Betriebsfrequenz zwischen 100 kHz und 30 MHz, die mit wenigstens einem Reader verbunden ist, und bei der wenigstens zwei je aus einer Antennenschleife mit mindestens einer Windung bestehende Antennen vorgesehen sind, bei der die wenigstens zwei Antennen (14, 15) annähernd in einer Ebene angeordnet sind, bei der zwischen dem wenigstens einen Reader (3) und den Antennen (14, 15) der Antennenanordnung wenigstens ein Multiplexer (8) oder wenigstens ein Multiplexer und wenigstens ein Power Splitter (9) zur gezielten Aktivierung der Antennen (14, 15) angeordnet ist, und bei der jede Antennenschleife eine Vorrichtung zum Auftrennen der inaktiv geschalteten Antennenschleife aufweist, **dadurch gekennzeichnet, dass** sich die Antennenschleifen der einzelnen Antennen (14, 15) teilweise überlappen, dass wenigstens eine Antennenschleife (14, 15) eine Fünfeckform aufweist, dass die Antennenschleife (14, 15) aus fünf Seiten (a bis e) gebildet wird, wobei von vier Seiten jeweils zwei Seiten (b und d; c und e) parallel zueinander ausgerichtet sind und diese zwei Seiten paarweise jeweils unterschiedliche Längen aufweisen, und dass zwischen den eine Ecke bildenden Seiten (b und c; c und d; d und e) dieser vier Seiten jeweils ein rechter Winkel von 90° ausgebildet ist, und dass zwischen den Seiten dieser vier Seiten und der fünften Seite, die eine Ecke bilden, (a und b; a und e) ein Winkel gebildet ist, der zwischen 132° und 138° liegt, so dass der Summenwinkel des Fünfecks 540° beträgt.

2. Antennenanordnung nach Anspruch 1, **dadurch gekennzeichnet, dass** jeweils nur eine Antenne einer Antennenanordnung gleichzeitig aktiviert ist.

3. Antennenanordnung nach Anspruch 1, **dadurch gekennzeichnet,**

   - **dass** die Antennenanordnung aus mindestens drei Antennen aufgebaut ist,
   - **dass** die Antennenanordnung über mindestens einen Power-Splitter (9) mit dem Reader (3) verbunden ist, und
- **dass** mindestens zwei Antennen gleichzeitig aktiviert sind.

4. Antennenanordnung nach Anspruch 1, **dadurch gekennzeichnet, dass** bei mindestens drei Antennen (4, 2, 1) jeweils mindestens zwei Antennen (4, 1) gleichzeitig aktiviert sind, wobei zwischen den wenigstens zwei aktivierten Antennen (4, 1) wenigstens eine Antenne (2) nicht aktiviert ist, und dass die aktivierten Antennen (4, 1) wenigstens zeitweise gegenphasige Stromrichtungen aufweisen.

5. Antennenanordnung nach Anspruch 1, **dadurch gekennzeichnet, dass** mindestens zwei sich wenigstens teilweise überlappende Antennen (24, 25) in einer ersten Ebene (10) mit Abstand und wenigstens annähernd parallel zu wenigstens zwei weiteren sich wenigstens teilweise überlappenden Antennen (26, 27) in einer zweiten Ebene (23) vorgesehen sind, und dass die Antennen (24, 25, 26, 27) über wenigstens einen Multiplexer einzeln nacheinander aktivierbar sind.

6. Antennenanordnung nach Anspruch 1, **dadurch gekennzeichnet, dass** mindestens zwei sich wenigstens teilweise überlappende Antennen (24, 25) in einer ersten Ebene (10) mit Abstand und wenigstens annähernd parallel zu wenigstens zwei weiteren sich wenigstens teilweise überlappenden Antennen (26, 27) in einer zweiten Ebene (23) vorgesehen sind, und dass eine Antenne (25) der ersten Ebene (10) und eine direkt gegenüberliegende Antenne (27) oder eine diagonal gegenüberliegende Antenne (26) der zweiten Ebene (23) gleichzeitig über wenigstens einen Power Splitter (9) und wenigstens einen Multiplexer (8) aktivierbar sind.

7. Antennenanordnung nach Anspruch 6, **dadurch gekennzeichnet, dass** die Stromrichtung der Antenne der ersten Ebene (10) gleich- oder gegenphasig zur Stromrichtung der Antenne der zweiten Ebene (23) ist.

8. Antennenanordnung nach Anspruch 7, **dadurch gekennzeichnet, dass** die Stromrichtung zwischen gleich- oder gegenphasiger Stromrichtung der Antennen umschaltbar ist.

9. Antennenanordnung nach Anspruch 8, **dadurch gekennzeichnet, dass** ein kontinuierlicher Wechsel der Stromrichtung zwischen gleich- oder gegenphasiger Stromrichtung der Antennen der beiden Ebenen (10, 23) mittels wenigstens eines um einen Betrag von 45° bis 135° phasenschiebenden Bauteiles erzielbar ist.

**Claims**

1. An antenna array for RFID antennas with an operating frequency between 100 kHz and 30 MHz, which antenna array is connected to at least one reader and in which at least two antennas are provided, each comprising an antenna loop with at least one coil, and in which the at least two antennas (14, 15) are arranged approximately in one plane, in which at least one multiplexer (8) or at least one multiplexer and at least one power splitter (9) for the selective activation of the antennas (14, 15) are arranged between the at least one reader (3) and the antennas (14, 15) of the antenna array, and in which each antenna loop has a device for isolating the inactively connected antenna loop, **characterised in that** the antenna loops of the individual antennas (14, 15) partly overlap one another, **in that** at least one antenna loop (14, 15) has a pentagonal shape, **in that** the antenna loop (14, 15) is formed from five sides (a to e), wherein two respective sides (b and d; c and e) out of four sides are orientated parallel to one another and these two pairs of sides each have different lengths, and **in that**, out of these four sides, in each case a right angle of 90° is formed between the angle-forming sides (b and c; c and d; d and e), and **in that** an angle lying between 132° and 138° is formed between those of the four sides and the fifth side that form an angle (a and b; a and e) so that the total angle of the pentagon is 540°.

2. An antenna array according to claim 1, **characterised in that** only one antenna of an antenna array is activated at any one time.

3. An antenna array according to claim 1, **characterised in that**

   - the antenna array is assembled from at least three antennas;
   - the antenna array is connected to the reader (3) via at least one power splitter (9), and
   - at least two antennas are activated simultaneously.

4. An antenna array according to claim 1, **characterised in that**, if there are at least three antennas (4, 2, 1), at least two antennas (4, 1) are activated simultaneously, wherein at least one antenna (2) is not activated between the at least two activated antennas (4, 1), and **in that** the activated antennas (4, 1) have current directions which are in phase opposition at least intermittently.

5. An antenna array according to claim 1, **characterised in that** at least two at least partly overlapping antennas (24, 25) are provided in a first plane (10) and are spaced apart from and are at least approximately parallel to at least two further at least partly overlapping antennas (26, 27) in a second plane (23), and **in that** the antennas (24, 25, 26, 27) are individually successively activatable via at least one multiplexer.

**6.** An antenna array according to claim 1, **characterised in that** at least two at least partly overlapping antennas (24, 25) are provided in a first plane (10) and are spaced apart from and are at least approximately parallel to at least two further at least partly overlapping antennas (26, 27) in a second plane (23), and **in that** an antenna (25) of the first plane (10) and a directly opposing antenna (27) or a diagonally opposing antenna (26) of the second plane (23) are activatable simultaneously via at least one power splitter (9) and at least one multiplexer (8).

**7.** An antenna array according to claim 6, **characterised in that** the current direction of the antenna of the first plane (10) is in phase with or in phase opposition to the current direction of the antenna of the second plane (23).

**8.** An antenna array according to claim 7, **characterised in that** the current direction is switchable between an in-phase and an antiphase current direction of the antennas.

**9.** An antenna array according to claim 8, **characterised in that** continuous alternation of the current direction between an in-phase and an antiphase current direction of the antennas of the two planes (10, 23) is achievable by means of at least one component which shifts the phase through an amount of 45° to 135°.

**Revendications**

**1.** Agencement d'antennes pour des antennes RFID ayant une fréquence de fonctionnement entre 100 kHz et 30 MHz, relié à au moins un lecteur et dans lequel sont prévues au moins deux antennes constituées chacune d'un lobe d'antenne avec au moins une spire, les au moins deux antennes (14, 15) étant disposées approximativement dans un plan, au moins un multiplexeur (8) ou au moins un multiplexeur et au moins un diviseur de puissance (9) étant prévus pour l'activation appropriée des antennes (14, 15) entre le au moins un lecteur (3) et les antennes (14, 15) de l'agencement d'antennes, et chaque lobe d'antenne présentant un agencement pour couper le lobe d'antenne mis à l'état inactif, **caractérisé en ce que** les lobes d'antenne de chacune des antennes (14, 15) se chevauchent partiellement, **en ce qu'**au moins un lobe d'antenne (14, 15) présente une forme pentagonale, **en ce que** le lobe d'antenne (14, 15) est formé de cinq côtés (a à e), deux côtés (b et d ; c et e) parmi quatre côtés étant disposés respectivement parallèlement l'un à l'autre et ces deux côtés présentant respectivement deux à deux des longueurs différentes, et **en ce qu'**un angle droit de 90° est formé entre les côtés (b et c ; c et d ; d et e) qui parmi ces quatre côtés forment une arête, et **en ce qu'**un angle compris entre 132° et 138° est formé entre les côtés (a et b ; a et e) qui, parmi ces quatre côtés et le cinquième côté, forment une arête, de sorte que la somme des angles du pentagone est de 540°.

**2.** Agencement d'antennes selon la revendication 1, **caractérisé en ce qu'**une seule antenne d'un agencement d'antennes est respectivement activée simultanément.

**3.** Agencement d'antennes selon la revendication 1, **caractérisé**

  - **en ce que** l'agencement d'antennes est constitué d'au moins trois antennes,
  - **en ce que** l'agencement d'antennes est relié au lecteur (3) par l'intermédiaire d'au moins un diviseur de puissance (9), et
  - **en ce qu'**au moins deux antennes sont activées simultanément.

**4.** Agencement d'antennes selon la revendication 1, **caractérisé en ce que** dans le cas de trois antennes (4, 2, 1), au moins deux antennes (4, 1) sont respectivement activées simultanément, au moins une antenne (2) n'étant pas activée entre les au moins deux antennes (4, 1) activées, et **en ce que** les antennes (4, 1) activées présentent au moins temporairement des courbes de courant en opposition de phase.

**5.** Agencement d'antennes selon la revendication 1, **caractérisé en ce qu'**au moins deux antennes (24, 25) qui se chevauchent au moins partiellement dans un premier plan (10) sont prévues avec un intervalle et au moins approximativement parallèles à au moins deux autres antennes (26, 27) qui se chevauchent au moins partiellement dans un second plan (23), et **en ce que** les antennes (24, 25, 26, 27) peuvent être activées séparément l'une après l'autre par l'intermédiaire d'au moins un multiplexeur.

**6.** Agencement d'antennes selon la revendication 1, **caractérisé en ce qu'**au moins deux antennes (24, 25) qui se chevauchent au moins partiellement dans un premier plan (10) sont prévues avec un intervalle et au moins approximativement parallèles à au moins deux autres antennes (26, 27) qui se chevauchent au moins partiellement dans un second plan (23), et **en ce qu'**une antenne (25) du premier plan (10) et une antenne (27) du second plan (23) directement opposée ou une antenne (26) du second plan (23) opposée en diagonale peuvent être activées simultanément par l'intermédiaire d'au moins un diviseur de puissance (9) et d'au moins un multiplexeur (8).

7. Agencement d'antennes selon la revendication 6**, caractérisé en ce que** la courbe de courant de l'antenne du premier plan (10) est en phase ou en opposition de phase par rapport à la courbe de courant de l'antenne du second plan (23).

8. Agencement d'antennes selon la revendication 7, **caractérisé en ce que** la courbe de courant est susceptible d'être inversée entre une courbe de courant des antennes en phase ou en opposition de phase.

9. Agencement d'antennes selon la revendication 8, **caractérisé en ce qu'**un changement continu de la courbe de courant entre une courbe de courant des antennes des deux plans (10, 23) en phase ou en opposition de phase est susceptible d'être obtenu au moyen d'au moins un composant déphaseur d'une valeur de 45° à 135°.

Fig. 1a

Fig. 1b

11

4        2        1

Fig. 2a

2

4        1    ← 10

7    5

6

8

3

Fig. 2b

Fig. 3

Fig. 4a

Fig. 4b

Fig. 5a

Fig. 5b

Fig. 6

Fig. 7

Fig. 8a

Fig. 8b

Fig. 9

Fig. 10a

Fig. 10b

Fig. 11

A1  A3

A2  A4

Fig. 12

Fig. 13

Fig. 14

28      29

28      29

Fig. 15a                    Fig. 15b

Fig. 16a

Fig. 16b

Fig. 16c

Fig. 17a

Fig. 17b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03026067 A1
- DE 20110926 U1
- DE 29921752 U1
- EP 1298573 A2
- DE 10056176 C1